# EUROPEAN PATENT SPECIFICATION

(11) **EP 0 584 051 B1**
(45) Date of publication and mention of the grant of the patent: **07.05.1997**
(21) Application number: 93850148.3
(22) Date of filing: 16.07.1993
(51) Int. Cl.: C04B 35/80, C04B 35/00, C04B 35/64, C04B 35/10

(54) **Method of manufacturing whisker-reinforced ceramics**
Verfahren zur Herstellung von Whisker-verstärkter Keramik
Procédé de fabrication de céramiques renforcées par des whiskers

(30) Priority: 17.07.1992 SE 9202196
(43) Date of publication of application: 23.02.1994
(73) Proprietor: SANDVIK AKTIEBOLAG, 811 81 Sandviken (SE)
(72) Inventor: Collin, Marianne, S-122 36 Enskede (SE); Carlström, Elis, S-417 24 Göteborg (SE); Nyberg, Brita, S-421 40 Västra Frölunda (SE); Sjöstedt, Martin, S-422 58 Hinsings Backa (SE)
(74) Representative: Östlund, Alf Olof Anders

(56) References cited:
- WO-A-88/07902
- WO-A-89/04735
- WO-A-93/22256
- DE-A- 3 835 728
- US-A- 4 526 734
- US-A- 5 340 532

## Description

The present invention relates to a method of manufacturing whisker reinforced ceramic cutting tool inserts with improved structure homogeneity.

It is well known in the art that the fracture toughness of a ceramic material can be increased by addition of mono-crystalline hair crystals (whiskers) and/or platelets. SiC-whiskers in an alumina matrix are disclosed in US 4,543,345. US 4,867,761 discloses the use of carbides, nitrides or borides of Ti and/or Zr in an alumina matrix. US 4,849,381 discloses a cutting tool insert comprising a mixture of whiskers and platelets.

Cutting tool inserts made of SiC-whisker-reinforced alumina are an established product on the cutting tool market mainly for machining of heat resistant materials and to some extent for machining of cast iron.

Whisker reinforced ceramic inserts are generally manufactured by uniaxial pressure sintering. Another possible way to manufacture such inserts is by tool pressing and glass encapsulated hot isostatic pressing. This latter manufacturing way is mainly used for inserts with more complex geometries. In both cases the powder that is filled into the pressing tool has to be granulated in order to obtain necessary flow properties. The most common way of granulating such powders is by spray-drying technique. Spray drying means that a slurry containing the powdery components of the final composition is dried and granulated in hot gas in the same process step. However, during spray drying the whiskers are drawn into the middle of the granules and the granule borders are depleted of whiskers. As a result the granules have a core armoured by whiskers and cannot therefore be completely crushed during the subsequent compaction process. This leads to an inhomogeneous structure with visible granule borders in the sintered material.

GB 2214178 discloses the manufacture of whisker reinforced ceramics by freeze drying the whisker/powder suspension. The resulting 'cake' is then shaken to break up the agglomerates and sifted through a 1 mm sieve. The powder is then compacted and sintered. The powder obtained after sifting has very poor flow properties and the method can only be used in the manufacture of bodies of simple shape such as cylinders, circular discs etc which are subsequently ground to final shape and dimension. Although GB 2214178 claims that the resulting material showed the whiskers to be well-dispersed, a certain segregation can not be avoided during the freezing at least on a larger(commercial) scale and as a result the sintered body has inhomogeneous whisker distribution.

A method of obtaining a whisker reinforced ceramic body with a structure essentially free of granule borders and an essentially one-dimensional whisker orientation by injection molding is disclosed in Swedish patent application 9100895-3.

In US-A-5 340 532, corresponding to Swedish patent application 9201376-2 and WO-A-93/22256 a method of forming ceramic bodies by temperature induced flocculation is disclosed which, if applied to whisker reinforced ceramic bodies, gives a structure essentially free of granule borders and with an isotropic whisker orientation.

US-A-4 526 734 discloses a method of producing a SiC sintered body. Normally, the body contains up to about 15 % sintering aids. The SiC and the sintering aid powders have a strong agglomeration tendency and it is difficult to obtain a uniform distribution. By freeze granulation and freeze drying, however, a uniform distribution was obtained.

WO-A-89/04735 discloses a process of preparing sintered articles containing reinforcement. A suitable suspension was frozen and freeze-dried to a body of final shape and sintered. The body was formed directly from the suspension.

According to the present invention it has been found that if drying and granulation are performed by freeze granulation it is possible to manufacture whisker reinforced ceramics with an improved homogeneity of the structure.

Fig 1 is a light optical micrograph in 100X of a cross section parallel to the pressing direction of a ceramic material consisting of Al₂O₃ reinforced with SiC-whiskers manufactured by spray drying and uniaxial pressure sintering.

Fig 2 is a corresponding micrograph of a material manufactured by freeze granulation according to the present invention.

According to the present invention there is now provided a method of manufacturing a whisker reinforced ceramic body by powder metallurgical methods, i.e., dispersion in a suitable liquid, granulation, compaction and sintering. By the use of freeze granulation as the granulating step, granules are obtained with a homogeneous distribution of whiskers in the ceramic matrix and the granules are therefore readily crushed during the compaction. As a result a ceramic body with homogeneous structure with essentially no granule borders is obtained and, in the case of a uniaxial compaction, an essentially two-dimensional whisker-orientation.

In the method according to the present invention the ceramic powders are thoroughly mixed preferably by dispersion in water or an organic solvent with suitable freezing point. The dispersion can be facilitated/improved by addition of organic additives and/or by adjustment of the pH-value when dispersing in water. If the powder shall be tool pressed binders are added. The dry content of the dispersion shall be in the range 10-50 % by volume, preferably 25-40% by volume. The dispersion is sprayed into a vessel having a temperature well below the freezing point of the dispersing medium, preferably into a vessel containing liquid nitrogen. In this way almost round frozen granules with essentially the same relative density as the dispersion are obtained. The diameter of the granules shall be in the range 0.01-1.0 mm, preferably 0.05-0.50 mm. The frozen granules are then transferred into a freeze drier where the frozen liquid is sublimated at suitable subpressure and temperature. After the freeze drying a powder is obtained with good flow properties which then is compacted and sintered in accordance with known technique.

The method according to the present invention is applicable to all kinds of whisker reinforced ceramic materials comprising, in addition to conventional sintering aids and/or grain growth inhibitors, 2-50, preferably 15-35 % by volume of single crystals whiskers and/or fibers and/or platelets and/or submicron particles of carbides, nitrides and/or borides of Si, Ti, Zr, Hf, Ta, and/or Nb or solid solutions thereof. The whisker/fiber material consists of hair-shaped monocrystals/polycrystals with a diameter of 0.2-10 µm and a length of 2.5-100 µm and a length/diameter ratio of preferably 5-10. The platelets are monocrystal plates with a diameter of 0.5-40 µm and a diameter/thickness ratio of 5-50, preferably 10-20. The submicron particles generally have a size <500 nm.

The grain size of the ceramic matrix shall be <10 µm, preferably <4 µm. The matrix is based on ceramic oxides, preferably Al₂O₃, or ceramic nitrides, preferably Si₃N₄, possibly further containing hard carbides and/or nitrides and/or borides and/or binder metal. The ceramic matrix shall preferably contain <20 volume-% ZrO₂. The relative density shall be at least 95 %, preferably 98 %, most preferably 99 %.

Compared to spray drying the freeze granulation technique, if optimized, will give almost no losses in material. The more homogeneous distribution of the whiskers is believed to allow for decreasing the whisker content with maintained performance or for increasing the whisker content in order to reach further improved performance.

### Example 1

A ceramic slurry was manufactured in a conventional way by wet dispersion in water. The dry content was 28% by volume of ceramics with the composition 75 weight-% alumina with sintering aid and 25 weight-% SiC-whiskers. The slurry was then divided into two parts. One part was dried and granulated by conventional spray-drying technique. The other part was sprayed into a vessel with liquid nitrogen and afterwards freeze dried at a temperature of about -20°C.

Both powders were then uniaxially pressure sintered at a pressure of 30 MPa and a temperature of 1850°C for 1 hour to round discs with the diameter 80 mm and the height 5.5 mm. From the discs square inserts with the style SNGN 120408 T02520 were manufactured.

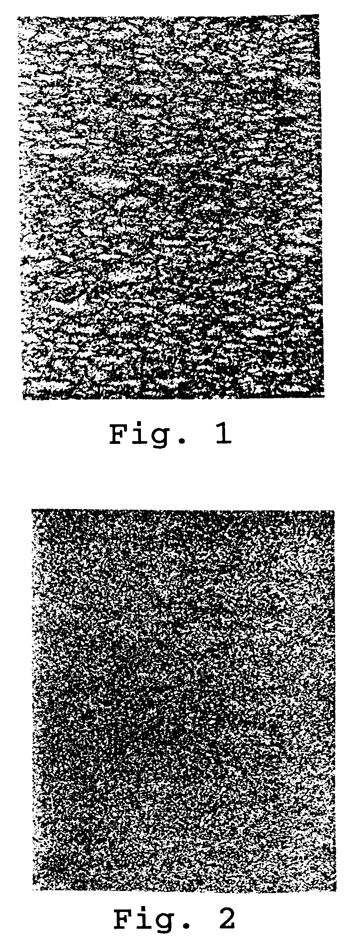

The microstructure of the inserts made from freeze granulated powder, fig. 2, shows a more homogeneous distribution of SiC-whiskers compared to the insert made from spray-dried powder, fig. 1, in which the original whisker depleted granule borders appear as a network surrounding the whisker-enriched original granule cores. The granules have been somewhat compressed in the pressing direction.

### Example 2

The inserts from example 1 were tested in a longitudinal turning operation according to the following:
Workpiece: Inconel 718Å
Cutting speed: 150 m/min
Cutting depth: 2.0 mm
Feed: 0.1 mm/rev

Result (time to notch wear >2 mm in minutes (mean of three tests))
- Variant A (prior art): 4.5
- Variant B (according to the invention): 6.0

These results indicate that the more favourable whisker distribution of variant B has resulted in a reduced notch wear.

### Example 3

A ceramic slurry was manufactured in the same way and with the same composition as in the case of example 1 with the addition of polyvinylalcohol and glycerol to the slurry. The slurry was divided into two parts. One part was dried and granulated by conventional spray-drying technique. The other part was sprayed into a vessel with liquid nitrogen and afterwards freeze dried at a temperature of about -20°C.

Both powders were manufactured in a so called Q-cut™ geometry by tool pressing. This geometry consists of an insert and a holder. The compacted bodies were treated in a combined debinding and presintering cycle in a graphite furnace. The final temperature was 1300°C and the furnace atmosphere was hydrogen. The presintered bodies were dipped with a suction cup in a BN-slurry and then in a mullite slurry according to Swedish patent application 9004134-4. The bodies, which now were surrounded by a covering BN-layer and on top of this a covering mullite layer, were placed in a glass powder bed and after that sintered by isostatic pressing at high temperature. Before the isostatic pressing the glass was melted in order to isolate the bodies from the overpressure in the furnace. The sintering was performed at 1550°C and 160 MPa. The microstructure of the bodies made from freeze granulated powder showed an obvious more homogeneous distribution of SiC-whiskers compared to the bodies made from spray-dried powder.

### Example 4

The bodies from the preceding example were ground peripherally to a diameter of 6.35 mm and edge-treated and afterwards tested in a longitudinal turning operation according to the following:
Workpiece: Inconel 718Å
Cutting speed: 200 m/min
Cutting depth: 1 mm
Feed: 0.15 mm/rev

Result (time to notch wear >2 mm in minutes (mean of three tests))
- Variant A (prior art): 5.0
- Variant B (according to the invention): 7.0

These results indicate that the more favourable whisker distribution of variant B has resulted in a reduced notch wear.

## Claims

1. Method of manufacturing a whisker reinforced ceramic body comprising 2-50 % by volume whiskers in an oxide or nitride based ceramic matrix by powder metallurgical methods comprising dispersion in a liquid, granulation, compaction and sintering **characterized** in that the granulation of the powder is performed by freeze granulation, i.e. spray freezing with subsequent freeze drying.

## Patentansprüche

1. Verfahren zur Herstellung eines Whisker-verstärkten Keramikkörpers mit 2 - 50 Vol.% Whiskern in einer Keramikmatrix auf Oxid- oder Nitridbasis durch pulvermetallurgische Verfahren unter Dispergieren in einer Flüssigkeit, Granulieren, Verdichten und Sintern, **dadurch gekennzeichnet,** daß das Granulieren des Pulvers durch Gefriergranulierung, d.h. Sprühgefrieren mit anschließendem Gefriertrocknen, durchgeführt wird.

## Revendications

1. Procédé de fabrication d'un corps céramique renforcé par des trichites comprenant 2 à 50% en volume de trichites dans une matrice céramique à base d'oxyde ou de nitrure au moyen de procédés de la métallurgie des poudres comprenant une dispersion dans un liquide, une granulation, un compactage et un frittage, caractérisé en ce que la granulation de la poudre s'effectue au moyen d'une granulation à létat congélé, à savoir congélation par pulvérisation suivie d'une lyophilisation.
